# EUROPÄISCHE PATENTSCHRIFT

(11) **EP 3 542 680 B1**
(45) Veröffentlichungstag und Bekanntmachung des Hinweises auf die Patenterteilung: **07.07.2021**
(21) Anmeldenummer: 19159948.9
(22) Anmeldetag: 28.02.2019
(51) Int. Cl.: A47J 31/36

(54) **BRÜHEINRICHTUNG**
BREWING DEVICE
DISPOSITIF D'INFUSION

(30) Priorität: 20.03.2018 DE 102018204275
(43) Veröffentlichungstag der Anmeldung: 25.09.2019
(73) Patentinhaber: BSH Hausgeräte GmbH, 81739 München (DE)
(72) Erfinder: Quittek, Benno, 83278 Traunstein (DE); Ostermaier, Albert, 83371 Stein a.d. Traun (DE)

(56) Entgegenhaltungen:
- EP-A1- 2 732 739
- DE-A1- 19 629 239
- DE-A1-102010 063 913

## Beschreibung

Die vorliegende Erfindung betrifft eine Brüheinrichtung, insbesondere für einen Kaffeeautomaten zur Zubereitung von Kaffeegetränken, mit einer durch einen Brühstößel und einen verstellbaren Brühtopf begrenzten Brühkammer zur Aufnahme von Kaffeemehl, gemäß dem Oberbegriff des Anspruchs 1. Die Erfindung betrifft außerdem einen Kaffeeautomaten mit einer solchen Brüheinrichtung.

Aus der DE 10 2009 032 677 A1 ist eine gattungsgemäße Brüheinrichtung zur Zubereitung von Kaffee und Espresso bekannt, die eine Brühkammer zur Aufnahme von gemahlenem Kaffeepulver sowie einen Brühkolben zumindest zum Schließen der Brühkammer besitzt. Darüber hinaus vorgesehen sind ein Einlassanschluss für Heißwasser sowie ein Auslassanschluss für das gebrühte Getränk sowie eine Befüllöffnung und eine Entleerungsöffnung zum Auswerfen eines Kaffeekuchens. Die Brühkammer ist dabei in einem Brühkammerschlitten angeordnet, der wiederum innerhalb eines Brühkammerrahmens linear verstellbar ist. Hierfür vorgesehen ist ein Antrieb, der die Brühkammer in eine Befüllposition, eine Brühposition sowie eine Brühkammerentleerungsposition und in eine Abstreiferposition verstellen kann. Hierdurch soll eine kompakte Anordnung ermöglicht werden. Eine gattungsgemäße Brüheinrichtung ist auch aus EP 2 732 739 A1 bekannt.

Für die Qualität von in Kaffeeautomaten hergestellten Kaffeegetränken ist insbesondere ein Verdichtungs- bzw. Verpressgrad des gemahlenen Kaffeepulvers in der Brühkammer verantwortlich, wobei zur Herstellung hochwertiger Kaffeegetränke der Verpressungsgrad nicht nur innerhalb enger Toleranzen liegen muss, sondern darüber hinaus auch vom Benutzer einstellbar sein sollte. Die Verpressung des gemahlenen Kaffeepulvers, das heißt des Kaffeemehls, hat dabei insbesondere Einfluss auf die sogenannte Crema. Darüber hinaus wird durch eine höhere Verpressung des Kaffeepulvers auch der Gegendruck des Kaffeepulvers beim Brühen erhöht, wobei ein zu hoher Verpressdruck zu vermeiden ist, da er in Kombination mit der Menge und Feinheit des Kaffeemehls zu einem sehr hohen Brühdruck, einem geringen Durchfluss oder sogar einer Undurchlässigkeit des Kaffeemehls führen kann.

Um den Verdichtungsgrad bzw. den Verpressungsgrad des Kaffeemehls begrenzen zu können, ist es aus der DE 10 2009 032 677 A1 beispielsweise bekannt, eine Drehmomentbegrenzung mit einem Drehmomentsensor zu realisieren. Sobald das voreingestellte und gewünschte Drehmoment erreicht ist, wird die Zustellbewegung gestoppt. Das Drehmoment beim Verpressen des Kaffeemehls wird dabei über die Stromaufnahme einer Antriebseinrichtung, beispielsweise eines Elektromotors, begrenzt, wobei aus dem Motorstrom auf die aktuelle Motorlast und damit das Drehmoment geschlossen wird. Wird somit ein vordefiniertes Drehmoment erreicht, wird der Elektromotor abgeschaltet oder ein entsprechendes Stromniveau gehalten.

Nachteilig bei der Begrenzung des Drehmoments zur Einstellung eines Verpressdrucks von Kaffeemehl ist dabei jedoch bislang eine vergleichsweise lange Toleranzkette, insbesondere bei einer Strombegrenzung, da beispielsweise eine Reibung in einem Getriebe, in einer Anschlusskupplung, ein Motorwirkungsgrad, eine Spannungsversorgung sowie eine Strommessung Toleranzen aufweisen können und dadurch berücksichtigt werden müssen. Beim Einsatz eines Drehmomentsensors ist darüber hinaus zum einen ein solcher Sensor mit Stromversorgung und Datenauswertung erforderlich, zum anderen ist ein derartiger Sensor möglichst nahe an einer Umsetzung von Rotation zu Translation zu platzieren und dadurch Verschmutzungen ausgesetzt, was die Funktionsfähigkeit langfristig beeinträchtigen kann. Soll die Brüheinrichtung entnehmbar sein, was beispielsweise im Zuge einer bessern Hygiene wünschenswert ist, ist auch eine entsprechende Kontaktierung des Sensors vorzusehen und gegebenenfalls gegen eine Verschmutzung zu schützen. Darüber hinaus kann eine Einstellung eines gewünschten Drehmoments ausschließlich über das Strommanagement des Elektromotors erfolgen, wofür wiederum entsprechende Softwareeinstellungen erforderlich sind, die für einen normalen Nutzer des Kaffeeautomaten bzw. der Brüheinrichtung nicht möglich sind, so dass dieser das Drehmoment und damit einen Verpressdruck des Kaffeemehls nicht oder zumindest nicht ohne Weiteres selbst einstellen kann.

Die vorliegende Erfindung beschäftigt sich daher mit dem Problem, für eine Brüheinrichtung der gattungsgemäßen Art eine verbesserte oder zumindest eine alternative Ausführungsform anzugeben, die die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Einstellung einer Verpresskraft von gemahlenem Kaffeemehl in einer Brühkammer einer Brüheinrichtung, insbesondere eines Kaffeeautomaten, nicht mehr über eine aufwändige Steuerung einer Antriebseinrichtung zu realisieren, sondern durch das einfache Vorsehen einer Kupplung zwischen der Antriebseinrichtung und dem Brühtopf, die bei Auftreten eines vordefinierten Drehmoments öffnet und dadurch eine Verstellbewegung des Brühtopfes von einer Drehbewegung der Antriebswelle entkoppelt, so dass in diesem Fall die Antriebseinrichtung weiterlaufen kann, jedoch auch in weiterlaufendem Zustand keine Erhöhung des Verpressdrucks von Kaffeemehl in der Brühkammer mehr bewirkt, da der Brühtopf nicht mehr weiter verstellt wird. Die erfindungsgemäße Brüheinrichtung weist dabei die zuvor erwähnte Brühkammer zur Aufnahme von Kaffeemehl, das heißt gemahlenem Kaffeepulver, auf sowie einen darin einfahrbaren Brühstößel zum Schließen der Brühkammer und gleichzeitig zum Verdichten des Kaffeemehls. Durch eine Relativbewegung zwischen dem Brühstößel und dem Brühtopf wird das in der Brühkammer angeordnete Kaffeemehl komprimiert und dadurch verpresst, wobei der Verpressgrad bzw. der Verpressdruck ausschlaggebend für die Herstellung hochwertiger Kaffeegetränke und insbesondere auch für eine sogenannte Crema sind. Zum Verstellen des Brühtopfes relativ zum Brühstößel ist dabei eine Antriebseinrichtung mit einer Antriebswelle vorgesehen, wobei zwischen der Antriebswelle der Antriebseinrichtung und dem Brühtopf erfindungsgemäß die zuvor beschriebene Kupplung angeordnet ist, die bei einem Auftreten eines vordefinierten Drehmoments öffnet und dadurch eine Verstellbewegung des Brühtopfes von einer Drehbewegung der Antriebswelle entkoppelt. Der große Vorteil liegt bei dieser Ausführungsform darin, dass die Drehmomentbegrenzung innerhalb der Brüheinrichtung mit vergleichsweise einfachen und kostengünstigen Bauteilen zu realisieren ist und insbesondere ohne aufwändige Sensoren, Software oder Steuerungen auskommt. Im Vergleich zu der aus dem Stand der Technik bekannten Drehmomentbegrenzung kann darüber hinaus die Toleranzkette deutlich kürzer gehalten werden, da die bislang toleranzbehafteten Bauteile innerhalb der bisherigen Toleranzkette, wie beispielsweise Getriebe, Anschlusskupplung, Motorwirkungsgrad, Spannungsversorgung und Strommessung, entfallen. Von weiterem großem Vorteil bei der erfindungsgemäßen Brüheinrichtung ist, dass die erfindungsgemäß vorgesehene Kupplung ähnlich wie beispielsweise bei einem Akkuschrauber einfach hinsichtlich ihres Auslösedrehmoments von einem Benutzer einstellbar ist, so dass sich für einen Benutzer ein deutlich erhöhter Bedien- und Einstellkomfort ergibt.

Bei einer vorteilhaften Weiterbildung der erfindungsgemäßen Lösung ist die Kupplung als, insbesondere einstellbare, Rutschkupplung ausgebildet. Eine derartige Rutschkupplung ist eine selbsttätig drehmomentschaltende Kupplung zwischen zwei Wellen, hier zwischen einer Antriebswelle und einer Spindel, die bei Erreichen eines definierten Drehmoments öffnet und dadurch eine Drehbewegung der Antriebswelle von einer Drehbewegung der den Brühtopf verstellenden Spindel entkoppelt. Für derartige Rutsch- bzw. Reibkupplungen sind dabei unterschiedlichste Ausführungsformen denkbar, wovon eine in den weiteren Absätzen und in der Figurenbeschreibung beschrieben wird.

Bei einer vorteilhaften Weiterbildung der erfindungsgemäßen Lösung weist die Kupplung einen Ring, eine Tellerfeder sowie Kugeln auf. Die Tellerfeder ist dabei zwischen der Antriebswelle und dem Ring angeordnet, und spannt den Ring über die Kugeln gegen die Spindel vor. Die Kugeln selbst laufen dabei in einem stirnseitigen Kreisbett der Spindel und werden über den Ring bzw. Tellerfeder in das Kreisbett vorgespannt. Liegt nun das für den Brühvorgang vorgesehene Kaffeemehl in der Brühkammer an, so wird diese über die Spindel translatorisch verstellt, wodurch der Brühstößel in die Brühkammer einfährt und das Kaffeemehl verdichtet. Die translatorische Verstellbewegung des Brühtopfes erfolgt über eine Drehbewegung der Spindel, wobei die Spindel wiederum von der sich drehenden Antriebswelle des Elektromotors angetrieben wird. Erreicht nun das Kaffeemehl einen vorgesehenen Verdichtungsgrad in der Brühkammer, so steigt die Kraft zum translatorischen Verstellen des Brühtopfes an, was sich wiederum in einem erhöhten Drehmoment an der Spindel bemerkbar macht. Überschreitet das zum weiteren Verdrehen der Spindel und damit zum weiteren translatorischen Verstellen des Brühtopfes erforderliche Drehmoment den vordefinierten Grenzwert, so öffnet die zwischen der Spindel und der Antriebswelle der Antriebseinrichtung angeordnete Kupplung, so dass sich die Antriebswelle der Antriebseinrichtung, beispielsweise des Elektromotors, weiter drehen kann, die Spindel jedoch stehen bleibt und dadurch keine weitere translatorische Verstellbewegung des Brühtopfes erfolgt. Der große Vorteil der erfindungsgemäßen Kupplung ist dabei, dass diese selbsttätig drehmomentschaltend ausgebildet ist und dadurch weder einen zusätzlichen Verkabelungsaufwand noch eine entsprechende Steuerungssoftware erfordert. Zudem kann die bislang vergleichsweise lange Toleranzkette deutlich verkürzt werden. Über den entfallenden Verkabelungsaufwand sowie die entfallende Steuerungssoftware lassen sich der Verpressdruck bzw. die Verpresskraft und damit auch der Verdichtungsgrad des Kaffeemehls in der Brühkammer vergleichsweise kostengünstig kontrollieren. Ein weiterer Vorteil besteht beispielsweise darin, dass durch entsprechende Schalter bzw. Hebel seitens des Benutzers vergleichsweise einfach Einfluss auf die von der Tellerfeder auf den Ring wirkende Kraft genommen werden kann, wodurch sich das vordefinierte Drehmoment, bei welchem die erfindungsgemäße Kupplung öffnet, vergleichsweise einfach vom Benutzer selbst einstellen lässt.

Die vorliegende Erfindung beruht weiter auf dem allgemeinen Gedanken, einen Kaffeeautomaten mit einer solchen Brüheinrichtung auszustatten, wodurch dieser konstruktiv einfach und damit kostengünstiger und zudem benutzerfreundlicher ausgestaltet werden kann.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

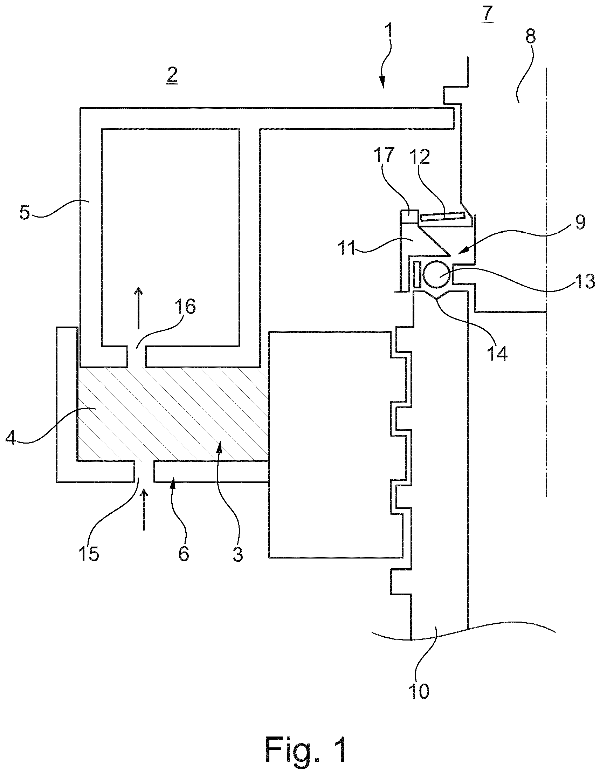

Die einzige Figur 1 zeigt eine schematische Schnittdarstellung durch eine erfindungsgemäße Brüheinrichtung.

Entsprechend der Figur 1, weist eine erfindungsgemäße Brüheinrichtung 1, die beispielsweise in einem Kaffeeautomaten 2 zur Zubereitung von Kaffeegetränken eingesetzt werden kann, eine Brühkammer 3 zur Aufnahme von gemahlenem Kaffeepulver, das heißt Kaffeemehl 4 sowie einen darin einfahrbaren Brühstößel 5 zum Schließen der Brühkammer 3 auf. Die Brühkammer 3 wird dabei von einem Brühtopf 6 einerseits und dem Brühstößel 5 andererseits begrenzt. Durch eine Relativbewegung zwischen dem Brühtopf 6 und dem Brühstößel 5, hier durch ein nach oben Fahren des Brühtopfes 6, ist das in der Brühkammer 3 angeordnete Kaffeemehl 4 komprimierbar, wodurch es sich für hochwertige Kaffeemischgetränke verdichten lässt. Zum Verstellen des Brühtopfes 6 gegen den Brühstößel 5 und damit zum Verdichten des Kaffeemehls 4 in der Brühkammer 3 ist eine Antriebseinrichtung 7 vorgesehen, die beispielsweise als Elektromotor mit einer Antriebswelle 8 ausgebildet ist. Zwischen der Antriebswelle 8 und dem Brühtopf 6 ist dabei nun erfindungsgemäß eine Kupplung 9 angeordnet, die bei Auftreten eines vordefinierten Drehmoments öffnet und dadurch eine Verstellbewegung des Brühtopfs 6 von einer Drehbewegung der Antriebswelle 8 entkoppelt.

Hierdurch kann eine konstruktiv vergleichsweise einfache Drehmomentbegrenzung geschaffen werden, ohne dass hierfür aufwändig zu verkabelnde, zu steuernde und zu kontrollierende Sensoren bzw. eine zugehörige Software erforderlich wären.

Der Brühtopf 6 ist dabei über eine drehbare Spindel 10 translatorisch verstellbar, wobei die Spindel 10 über die zuvor beschriebene Kupplung 9 mit der Antriebswelle 8 der Antriebseinrichtung 7 antriebsverbunden ist.

Die Brühkammer 3 besitzt gemäß der Figur 1 unten, das heißt am Brühtopf 6, einen Wasserzulauf 15 und oben, das heißt im vorliegenden Fall am Brühstößel 5, einen Kaffeeauslauf 16, so dass der Kaffee im gezeigten Ausführungsbeispiel durch den Brühstößel 5 hindurch ausgegeben wird.

Die Kupplung 9 selbst kann dabei als eine insbesondere einstellbare Rutschkupplung ausgebildet sein, die bei Erreichen bzw. Überschreiten eines vordefinierten Drehmoments zwischen der Antriebswelle 8 und der Spindel 10 öffnet und dadurch ein weiteres Verstellen des Brühtopfs 6 und damit ein weiteres Verdichten des Kaffeemehls 4 in der Brühkammer 3 verhindert.

Die Kupplung 9 weist einen Ring 11, eine Tellerfeder 12 sowie Kugeln 13 auf, wobei die Kugeln 13 in einem stirnseitigen Kreisbett 14 der Spindel 10 gelagert sind. Die Tellerfeder 12 ist zwischen der Antriebswelle 8 und dem Ring 11 angeordnet und spannt die Kugeln 13 über den Ring 11 in das stirnseitig an der Spindel 10 angeordnete Kreisbett 14 vor. Die Vorspannung der Kugeln 13 bewirkt bis zu einem vordefinierten Drehmoment eine Drehmomentübertragung zwischen der Antriebswelle 8 und der Spindel 10 und ein Rollen der Kugeln 13 im Kreisbett 14 nach Erreichen bzw. Überschreiten des vordefinierten Drehmoments, wodurch die Drehbewegung der Antriebswelle 8 nicht mehr an die Spindel 10 übertragen und dadurch eine translatorische Verstellung des Brühtopfes 6 unterbrochen wird. Über die Einstellung der Federkraft kann der Benutzer Einfluss auf das zu übertragende Drehmoment nehmen und dadurch den Öffnungszeitpunkt der Kupplung 9 zumindest in Bereichen selbst einstellen. Hierzu kann darüber hinaus eine Einstelleinrichtung 17 vorgesehen sein.

Mit der erfindungsgemäßen Brüheinrichtung 1 lässt sich insbesondere auch eine bislang vergleichbar lange Toleranzkette deutlich verkürzen, wodurch eine äußerst exakte Drehmomentbegrenzung möglich ist. Zudem lässt sich die erfindungsgemäße Brüheinrichtung hinsichtlich der Drehmomentbegrenzung und damit der Druckbegrenzung auf das Kaffeemehl 4 in der Brühkammer 3 konstruktiv deutlich einfach und damit kostenfreundlicher gestalten. Über die Einstellbarkeit, beispielsweise einer Federkraft, bzw. des vordefinierten Drehmoments, kann darüber hinaus eine erhöhte Benutzerfreundlichkeit erreicht werden.

Zudem ist auch eine erleichterte Reinigung der erfindungsgemäßen Brühkammer 3 möglich, da diese beispielsweise einfach entnommen werden kann, ohne dass bislang erforderliche drehmomentbegrenzende Sensoren entkoppelt werden müssten.

### Bezugszeichenliste

- 1: Brüheinrichtung
- 2: Kaffeevollautomat
- 3: Brühkammer
- 4: Kaffeemehl
- 5: Brühstößel
- 6: Brühtopf
- 7: Antriebseinrichtung
- 8: Antriebswelle
- 9: Kupplung
- 10: Spindel
- 11: Ring
- 12: Tellerfeder
- 13: Kugel
- 14: Kreisbett
- 15: Wasserzulauf
- 16: Kaffeeauslauf
- 17: Einstelleinrichtung

## Patentansprüche

1. Brüheinrichtung (1), insbesondere für einen Kaffeeautomaten (2) zur Zubereitung von Kaffeegetränken, mit einer durch einen Brühstößel (5) und einen Brühtopf (6) begrenzten Brühkammer (3) zur Aufnahme von Kaffeemehl (4), wobei durch eine Relativbewegung zwischen dem Brühtopf (6) und dem Brühstößel (5) das in der Brühkammer angeordnete Kaffeemehl (4) komprimierbar ist, wobei eine Antriebseinrichtung (7) zum Verstellen des Brühtopfes (6) relativ zum Brühstößel (5) vorgesehen ist und wobei zwischen einer Antriebswelle (8) der Antriebseinrichtung (7) und dem Brühtopf (6) eine Kupplung (9) angeordnet ist, die bei Auftreten eines vordefinierten Drehmoments öffnet und eine Verstellbewegung des Brühtopfes (6) von einer Drehbewegung der Antriebswelle (8) entkoppelt, **dadurch gekennzeichnet, dass** eine Einstelleinrichtung (17) zur Einstellung des vordefinierten Drehmoments an der Kupplung (9) vorgesehen ist.

2. Brüheinrichtung nach Anspruch 1, **dadurch gekennzeichnet, dass** der Brühtopf (6) über eine drehbare Spindel (10) translatorisch verstellbar ist, wobei die Spindel (10) über die Kupplung (9) mit der Antriebswelle (8) der Antriebseinrichtung (7) antriebsverbunden ist.

3. Brüheinrichtung nach Anspruch 1 oder 2, **dadurch gekennzeichnet, dass** die Antriebseinrichtung (7) ein Elektromotor ist.

4. Brüheinrichtung nach einem der vorhergehenden Ansprüche, **dadurch gekennzeichnet, dass** die Kupplung (9) als, insbesondere einstellbare, Rutschkupplung ausgebildet ist.

5. Brüheinrichtung nach einem der vorhergehenden Ansprüche, **dadurch gekennzeichnet, dass** die Kupplung (9) einen Ring (11), eine Tellerfeder (12) und Kugeln (13) aufweist.

6. Brüheinrichtung nach Anspruch 5, **dadurch gekennzeichnet, dass** die Kugeln (13) in einem stirnseitigen Kreisbett (14) der Spindel (10) gelagert sind.

7. Brüheinrichtung nach Anspruch 6, **dadurch gekennzeichnet, dass** die Tellerfeder (12) zwischen der Antriebswelle (8) und dem Ring (11) angeordnet ist und die Kugeln (13) über den Ring (11) gegen die Spindel (10) vorspannt.

8. Kaffeeautomat (2) mit einer Brüheinrichtung (1) nach einem der Ansprüche 1 bis 7.

## Claims

1. Brewing device (1), in particular for a coffee machine (2) for the preparation of coffee beverages, with a brewing chamber (3) delimited by a brewing plunger (5) and a brewing pot (6) for receiving ground coffee (4), wherein the ground coffee (4) arranged in the brewing chamber can be compressed by way of a relative movement between the brewing pot (6) and the brewing plunger (5), wherein a drive device (7) is provided for adjusting the brewing pot (6) relative to the brewing plunger (5) and wherein a coupling (9) is arranged between a drive shaft (8) of the drive device (7) and the brewing pot (6), which coupling (9) opens when a predefined torque occurs and decouples an adjustment movement of the brewing pot (6) from a rotational movement of the drive shaft (8), **characterised in that** a setting device (17) is provided for setting the predefined torque at the coupling (9).

2. Brewing device according to claim 1, **characterised in that** the brewing pot (6) is translationally adjustable via a rotatable spindle (10), wherein the spindle (10) is connected to, so as to be driven by, the drive shaft (8) of the drive device (7) via the coupling (9).

3. Brewing device according to claim 1 or 2, **characterised in that** the drive device (7) is an electric motor.

4. Brewing device according to one of the preceding claims, **characterised in that** the coupling (9) is embodied as a slipping coupling, in particular a settable slipping coupling.

5. Brewing device according to one of the preceding claims, **characterised in that** the coupling (9) has a ring (11), a disc spring (12) and spheres (13).

6. Brewing device according to claim 5, **characterised in that** the spheres (13) are supported in a round trough (14) on the front side of the spindle (10).

7. Brewing device according to claim 6, **characterised in that** the disc spring (12) is arranged between the drive shaft (8) and the ring (11) and the spheres (13) are pretensioned against the spindle (10) via the ring (11).

8. Coffee machine (2) with a brewing device (1) according to one of the claims 1 to 7.

## Revendications

1. Dispositif d'échaudage (1), en particulier pour une machine à café automatique (2) pour la préparation de boissons à base de café, avec une chambre d'échaudage (3) délimitée par un plongeur d'échaudage (5) et un pot d'échaudage (6) pour l'accueil de café moulu (4), dans lequel un mouvement relatif entre le pot d'échaudage (6) et le plongeur d'échaudage (5) permet de comprimer le café moulu (4) se trouvant dans la chambre d'échaudage, dans lequel un dispositif d'entraînement (7) est prévu pour le déplacement du pot d'échaudage (6) par rapport au plongeur d'échaudage (5) et dans lequel un accouplement (9) est disposé entre un arbre d'entraînement (8) du dispositif d'entraînement (7) et le pot d'échaudage (6), lequel accouplement s'ouvre à la survenue d'un couple prédéfini et découple un mouvement de déplacement du pot d'échaudage (6) d'un mouvement rotatif de l'arbre d'entraînement (8), **caractérisé en ce qu'**un dispositif de réglage (17) pour le réglage du couple prédéfini est prévu sur l'accouplement (9).

2. Dispositif d'échaudage selon la revendication 1, **caractérisé en ce que** le pot d'échaudage (6) est déplaçable en translation via une broche rotative (10), dans lequel la broche (10) est reliée en entraînement avec l'arbre d'entraînement (8) du dispositif d'entraînement (7) via l'accouplement (9).

3. Dispositif d'échaudage selon la revendication 1 ou 2, **caractérisé en ce que** le dispositif d'entraînement (7) est un moteur électrique.

4. Dispositif d'échaudage selon l'une des revendications précédentes, **caractérisé en ce que** l'accouplement (9) est formé sous la forme d'un limiteur de couple, en particulier réglable.

5. Dispositif d'échaudage selon l'une des revendications précédentes, **caractérisé en ce que** l'accouplement (9) présente une bague (11), une rondelle conique (12) et des billes (13).

6. Dispositif d'échaudage selon la revendication 5, **caractérisé en ce que** les billes (13) sont logées dans un lit circulaire frontal (14) de la broche (10).

7. Dispositif d'échaudage selon la revendication 6, **caractérisé en ce que** la rondelle conique (12) est disposée entre l'arbre d'entrainement (8) et la bague (11) et précontraint les billes (13) via la bague (11) contre la broche (10).

8. Machine à café automatique (2) avec un dispositif d'échaudage (1) selon l'une des revendications 1 à 7.
